Europäisches Patentamt

European Patent Office

Office européen des brevets

(11) Numéro de publication: **0 408 434 A1**

# (12) DEMANDE DE BREVET EUROPEEN

(21) Numéro de dépôt: 90401971.8

(22) Date de dépôt: 09.07.90

(51) Int. Cl.5: **G02B 27/14, G02B 26/10**

(30) Priorité: 10.07.89 FR 8909237

(43) Date de publication de la demande:
16.01.91 Bulletin 91/03

(84) Etats contractants désignés:
AT BE CH DE DK ES FR GB GR IT LI LU NL SE

(71) Demandeur: BERTIN & CIECIE
B.P. nr. 3
F-78373 Plaisir Cédex(FR)

(72) Inventeur: Boy, Raymond

15, Rue des Jardins
F-13127 Vitrolles(FR)
Inventeur: Maillard, Jean-Michel
5, rue Jaubert
F-13100 Aix en Provence(FR)
Inventeur: Sansonetti, Pierre
Les Vignes de Marius, Jas de Bouffan
F-13090 Aix en Provence(FR)

(74) Mandataire: Ramey, Daniel et al
Cabinet Ores 6 Avenue de Messine
F-75008 Paris(FR)

(54) Structure de miroir et son procédé de fabrication.

(57) Structure de miroir pour balayage optique synchrone, comprenant un disque plan (28) formé avec une ouverture traversante comportant une face plate diamétrale (34) qui reçoit un faisceau lumineux (16) et le réfléchit en direction d'une cible, le rayonnement lumineux (22) réfléchi ou diffusé par la cible étant capté sur une face (30) du disque (28) et réfléchi sensiblement coaxialement au faisceau lumineux (16) incident.

FIG.3

## STRUCTURE DE MIROIR ET SON PROCÉDÉ DE FABRICATION

L'invention concerne une structure de miroir et son procédé de fabrication, en particulier une structure de miroir permettant de réaliser un balayage optique synchrone avec des champs d'émission et de réception lumineuse qui sont sensiblement confondus.

On peut utiliser, pour obtenir des champs coaxiaux d'émission et de réception lumineuse, un simple miroir plan interposé entre une source de lumière et une cible, le faisceau lumineux émis par la source étant réfléchi par ce miroir plan vers la cible, tandis que le rayonnement réfléchi ou diffusé par la cible est repris par le miroir plan et réfléchi en direction d'un détecteur. L'intensité du rayonnement réfléchi ou diffusé par la cible étant beaucoup plus faible que celui émis par la source, on utilise un détecteur avec un gain très important. Dans ces conditions, il faut veiller à éviter tout retour de la lumière d'émission vers le détecteur, par réflexion ou par diffusion.

Or, lorsqu'on utilise une même surface réfléchissante pour émettre le faisceau lumineux vers la cible et capter le rayonnement réfléchi ou diffusé par celle-ci, il se produit inévitablement une diffusion de la lumière au point d'impact sur la surface réfléchissante du faisceau lumineux émis par la source et cette lumière diffusée vient s'ajouter au rayonnement réfléchi ou diffusé par la cible et perturbe donc, de façon relativement importante, les mesures effectuées sur ce rayonnement.

L'invention a essentiellement pour but d'éviter cet inconvénient de la technique antérieure.

Elle a donc pour objet une structure de miroir, du type permettant l'émission d'un faisceau lumineux en direction d'une cible et la collecte par réflexion du rayonnement lumineux provenant de la cible, sans que ce dernier soit perturbé par une éventuelle diffusion du faisceau lumineux émis vers la cible.

L'invention a également pour objet une structure de ce type, qui soit simple et monobloc.

Elle a encore pour objet une structure de ce type, dans laquelle les champs d'émission et de réception lumineuse sont sensiblement coaxiaux.

Elle propose, à cet effet, une structure de miroir destinée à réfléchir vers une cible un faisceau lumineux provenant d'une source de lumière, et à réfléchir vers un détecteur le rayonnement lumineux provenant de la cible, caractérisée en ce qu'elle comprend deux surfaces réfléchissantes inégales, planes et orthogonales, formant un dièdre droit, dont la plus petite reçoit le faisceau lumineux en provenance de la source et le réfléchit vers la cible et dont la plus grande reçoit le rayonnement provenant de la cible et le réfléchit vers le détecteur, sensiblement coaxialement au faisceau lumineux provenant de la source.

Ainsi, selon l'invention, les deux faces réfléchissantes recevant respectivement le faisceau lumineux émis par la source et le rayonnement lumineux provenant de la cible, sont indépendantes et sont constituées par les deux faces extérieures d'un dièdre à angle droit, de sorte que les diffusions de lumière sur l'une des faces réfléchissantes ne peuvent avoir d'effet sur la lumière réfléchie par l'autre face réfléchissante. En outre, on conserve le parallélisme et éventuellement la coaxialité des champs d'émission et de réception lumineuse.

Selon une autre caractéristique de l'invention, cette structure est montée à rotation autour d'un axe parallèle à l'arête du dièdre formé par les deux surfaces réfléchissantes, cet axe étant préférence contenu dans la surface réfléchissante qui reçoit le faisceau lumineux en provenance de la source.

On réalise ainsi une structure permettant un balayage optique synchrone d'une portion d'espace.

En variante, cette structure peut être montée à rotation autour de l'axe du faisceau lumineux provenant de la source.

Selon un mode de réalisation préféré de l'invention, cette structure est formée d'un disque plan, à contour circulaire, dont une face réfléchissante reçoit le rayonnement provenant de la cible et comprend une ouverture ou découpe traversante, comportant une face plate réfléchissante qui est perpendiculaire à la face réfléchissante du disque et qui forme la surface de réception du faisceau lumineux provenant de la source.

De préférence, cette face plate contient l'axe longitudinal du disque, et l'ouverture précitée est de forme semi-cylindrique.

L'invention propose également un procédé de fabrication d'une structure de miroir du type précité, caractérisé en ce qu'il consiste à découper une carotte cylindrique au centre d'un disque de matière utilisée pour former le miroir, à partager cette carotte en deux moitiés par un plan passant par son axe longitudinal, et à coller l'une de ces moitiés de carotte à sa place initiale dans la découpe formée dans le disque, après avoir poli sa face plate et une face du disque.

Le procédé consiste également à déposer un revêtement réfléchissant sur cette face plate polie de la moitié de carotte et sur la face polie du disque.

La structure obtenue est simple, compacte et monobloc.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :

- la figure 1 illustre schématiquement les moyens de la technique antérieure permettant un balayage synchrone à champs d'émission et de réception lumineuse confondus;
- la figure 2 est une vue en plan d'une structure de miroir selon l'invention;
- la figure 3 est une vue en coupe de cette structure illustrant son fonctionnement.

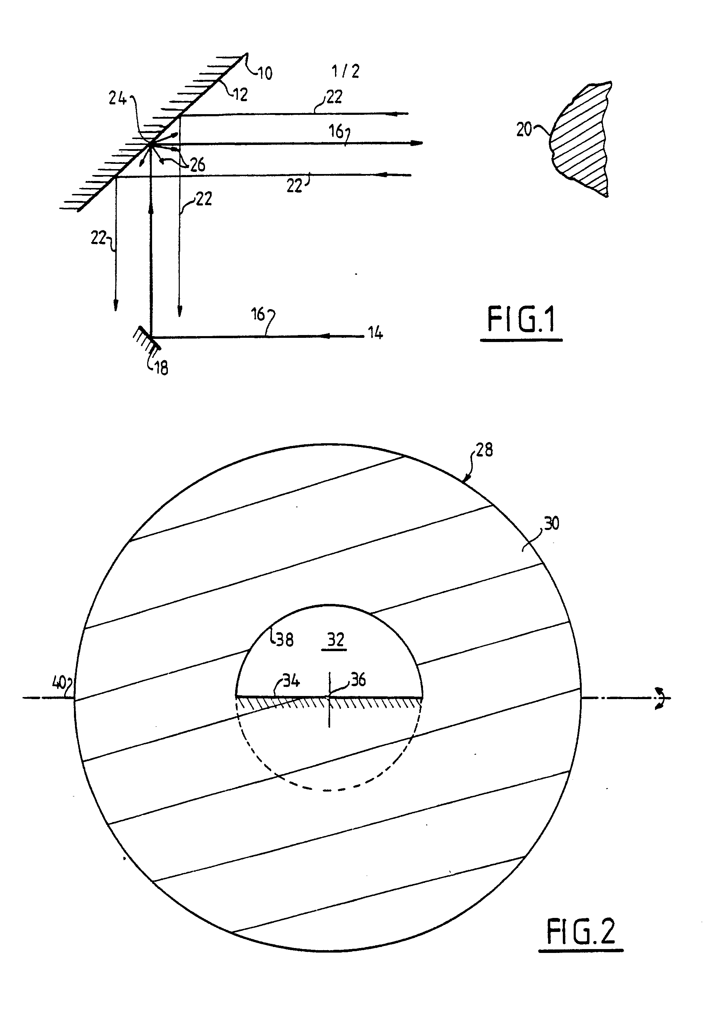

On se réfère tout d'abord à la figure 1, qui concerne la technique antérieure, et dans laquelle on a représenté un miroir plan 10 à surface réfléchissante 12, recevant d'une source de lumière 14 un faisceau lumineux 16, par l'intermédiaire d'un petit miroir de renvoi 18. Le miroir 10 réfléchit le faisceau 16 en direction d'une cible 20.

Le rayonnement lumineux 22 réfléchi ou diffusé par cette cible est capté par le miroir 12 et réfléchi par celui-ci en direction d'un photo-détecteur non représenté, qui est par exemple une photo-diode à avalanche ayant un gain très important.

On voit en figure 1 que les axes des champs d'émission et de réception lumineuse de cette structure sont confondus.

Les faisceaux lumineux 16 provenant de la source et 22 provenant de la cible sont tous deux modulés en intensité. Par mesure de la différence de phase entre leurs intensités, on peut mesurer la distance de la cible 20.

Le miroir 10 peut être monté à rotation autour d'un axe 24 qui est perpendiculaire au plan du dessin de la figure 1 et qui passe par le point d'incidence du faisceau 16, sur le miroir 10. La rotation du miroir autour de cet axe 24 permet un balayage optique synchrone, sans modification de la direction du rayonnement lumineux 22 réfléchi par le miroir 10.

Cependant, il se produit une diffusion de lumière, comme indiqué par les petites flèches 26, au point d'incidence du faisceau lumineux 16 sur la surface réfléchissante 12 du miroir 10. Cette lumière diffuse vient se combiner au rayonnement lumineux 22 réfléchi par le miroir 10 vers le photo-détecteur et vient donc perturber les mesures.

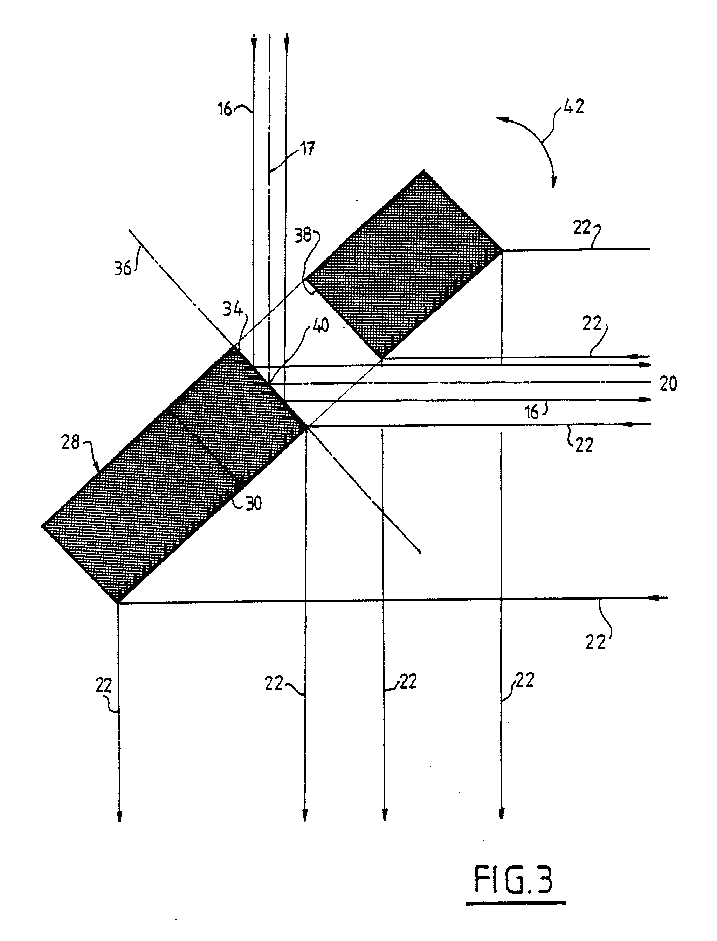

La structure de miroir représentée dans les figures 2 et 3 permet notamment d'éviter cet inconvénient.

Dans un mode de réalisation préféré de l'invention, elle comprend essentiellement un disque 28 de matière utilisée pour la réalisation d'un miroir, à contour circulaire, qui comporte une face 30 polie et très réfléchissante et une découpe ou ouverture 32 dont une face plate 34 contient l'axe longitudinal 36 du disque 28 et s'étend perpendiculairement à la face réfléchissante 30 de ce disque.

Comme représenté, cette découpe 32 peut être de forme semi-cylindrique, et comprend donc une face 38 semi-cylindrique concave raccordée à la face plate 34 qui en constitue un plan diamétral.

La face plate 34 de l'ouverture 32 est polie et réfléchissante, et forme la surface de réception du faisceau lumineux 16 émis par la source de lumière. Ce faisceau lumineux est réfléchi en direction de la cible 20, tandis que le rayonnement lumineux 22 réfléchi ou diffusé par cette cible est repris par la face 30 du disque 28 et est réfléchi en direction d'un photo-détecteur.

On voit que les axes des champs d'émission et de réception lumineuse sont parallèles et sensiblement confondus.

Pour réaliser un balayage optique, le disque 28 est monté à rotation autour d'un axe diamétral 40 de ce disque, cet axe 40 étant contenu dans le plan de la face plate 34 recevant le faisceau lumineux 16. De préférence, l'axe 40 passe par le point d'incidence sur cette face 34 de l'axe du faisceau lumineux 16, comme on l'a représenté schématiquement en figure 3.

Lorsque le miroir 28 pivote autour de l'axe 40, comme représenté par la double flèche 42 en figure 3, le faisceau lumineux 16 réfléchi par la surface plate 34 peut balayer une portion d'espace, tandis que le rayonnement lumineux 22 réfléchi par la face 30 du disque 28 conserve la même direction. On pourrait bien entendu donner une autre forme à la découpe 32 formée dans le disque 28, pour autant que cette découpe conserve une face plate 34 de réception du faisceau lumineux 16.

En variante, le disque 28 peut être monté à rotation autour de l'axe 17 du faisceau 16 provenant de la source lumineuse.

On va maintenant décrire, à titre d'exemple, un procédé de réalisation de la structure d'un miroir selon l'invention.

Ce procédé consiste à découper dans un disque 28, une carotte cylindrique à section circulaire, dont le centre coïncide avec le centre du disque 28.Cette carotte est ensuite coupée en deux selon un plan diamétral passant par son axe longitudinal, puis l'une des moitiés de carotte est recollée à sa place initiale, de façon à donner la structure finale représentée dans les figures 2 et 3.

La perpendicularité des deux faces 30 et 34 de la moitié de carotte est obtenue par polissage optique et contrôle sur goniomètre.

La face 30 du miroir et la face correspondante de la moitié de carotte sont ajustées dans un même plan en achromatisant ces surfaces sur un même plan étalon, puis en collant la demi-carotte avec une colle qui ne fait subir aucune déformation à l'ensemble.

Cette demi-carotte est collée sur la découpe cylindrique du disque 28 avec une précision suffisante, par exemple de quelques dizaines de secondes d'arc, pour que les champs d'émission et de réception coïncident.

De préférence, la face plate 34 de cette demi-carotte et la face 30 du disque 28 sont polies avec une précision de l'ordre du quart de la longueur d'onde et sont pourvues d'un revêtement très réfléchissant, par exemple de l'argent, ayant par exemple un coefficient de réflexion supérieur à 95% pour une longueur d'onde de 830 nm.

Le disque 28 peut être en toute matière appropriée ayant une bonne qualité optique, par exemple du type "zérodur".

## Revendications

1. Structure de miroir, destinée à réfléchir vers une cible (20) un faisceau lumineux (16) provenant d'une source de lumière (14), et à réfléchir vers un détecteur le rayonnement lumineux (22) provenant de la cible, caractérisée en ce qu'elle comprend deux surfaces réfléchissantes (30, 34) inégales, planes et orthogonales et formant un dièdre droit, dont la plus petite (34) reçoit le faisceau lumineux (16) en provenance de la source et le réfléchit vers la cible, et dont la plus grande (30) reçoit le rayonnement (22) provenant de la cible et le réfléchit vers le détecteur, sensiblement coaxialement au faisceau lumineux (16) provenant de la source.

2. Structure selon la revendication 1, caractérisée en ce qu'elle est montée à rotation autour d'un axe (40) parallèle à l'arête du dièdre formé par les deux surfaces réfléchissantes (30, 34) et/ou autour de l'axe (17) du faisceau (16) provenant de la source.

3. Structure selon la revendication 2, caractérisée en ce que cet axe (40) est contenu dans la surface réfléchissante (34) recevant le faisceau lumineux (16) en provenance de la source.

4. Structure selon l'une des revendications précédentes, caractérisée en ce qu'elle est formée d'un disque plan (28), à contour circulaire, dont une face réfléchissante (30) reçoit le rayonnement (22) provenant de la cible et comprend une ouverture ou découpe (32) traversante, comportant une face plate (34) réfléchissante qui est perpendiculaire à la face réfléchissante (30) du disque et qui forme la surface de réception du faisceau lumineux (16) provenant de la source.

5. Structure selon la revendication 4, caractérisée en ce que cette face plate (34) contient l'axe longitudinal (36) du disque (28).

6. Structure selon la revendication 4 ou 5, caractérisée en ce que l'ouverture (32) est de forme semi-cylindrique.

7. Structure selon l'une des revendications 4 à 6? caractérisée en ce que ladite face (30) du disque (28) et la face plate (34) de l'ouverture (32) sont polies et pourvues d'un revêtement réfléchissant.

8. Procédé de fabrication d'une structure de miroir selon l'une des revendications 1 à 7, caractérisé en ce qu'il consiste à découper une carotte cylindrique au centre d'un disque (28) de matière utilisée pour réaliser un miroir, à partager cette carotte en deux moitiés par un plan passant par son axe longitudinal, et à coller l'une de ces moitiés de carotte à sa place initiale dans la découpe formée dans le disque, après avoir poli sa face plate (34) et une face (30) du disque (28).

9. Procédé selon la revendication 8, caractérisé en ce qu'il consiste à déposer un revêtement réfléchissant sur ladite face plate polie (34) de la moitié de la carotte et sur la face polie (30) du disque.

10. Procédé selon la revendication 8 ou 9, caractérisé en ce qu'il consiste à monter le disque (28) à rotation autour d'un de ses diamètres (40) contenu dans le plan de la face plate (34) de la moitié de carotte, et/ou autour de l'axe (17) du faisceau lumineux (16) provenant de la source.

1 / 2

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-C- 523 073 (ART PHOTOGRAVURE CO.) * Figure 6; revendication * | 1,4,5,7 | G 02 B 27/14 G 02 B 26/10 |
| A |  | 8 |  |
| Y | US-A-4 326 799 (W.H. KEENE et al.) * Figures 2,8; résumé * | 1,4,5,7 |  |
| A | APPLIED OPTICS, vol. 24, no. 14, juillet 1985, pages 2076-2080, New York, US; S.A. SUGIMOTO et al.: "Digital composition of images with increased depth of focus considering depth information" * Figure 1 * | 1 |  |
| A | EP-A-0 196 789 (SPECTRA-TECH) * Figure 1; résumé * | 1 |  |

### DOMAINES TECHNIQUES RECHERCHES (Int. Cl.5)

G 02 B

Le présent rapport a été établi pour toutes les revendications

| Lieu de la recherche | Date d'achèvement de la recherche | Examinateur |
|---|---|---|
| LA HAYE | 09-10-1990 | VAN DOREMALEN,J.C.H. |